# EUROPEAN PATENT SPECIFICATION

(11) **EP 1 341 606 B1**
(45) Date of publication and mention of the grant of the patent: **06.08.2008**
(21) Application number: 01990465.5
(22) Date of filing: 30.11.2001
(51) Int. Cl.: B01J 23/00, B01J 19/00

(54) **PROCESS FOR PRODUCING A MULTIPLICITY OF BUILDING BLOCKS OF A LIBRARY OF MATERIALS**
VERFAHREN ZUR HERSTELLUNG EINER VIELZAHL VON BAUSTEINEN EINER MATERIALBIBLIOTHEK
PROCEDE DE PRODUCTION DE PLUSIEURS ELEMENTS STRUCTURAUX D'UNE BIBLIOTHEQUE DE SUBSTANCES

(30) Priority: 01.12.2000 DE 10059890
(43) Date of publication of application: 10.09.2003
(73) Proprietor: HTE Aktiengesellschaft The High Throughput Experimentation Company, 69123 Heidelberg (DE)
(72) Inventor: NEWSAM, John, Michael, San Diego, CA 92130 (US); SCHUNK, Stephan, Andreas, 69117 Heidelberg (DE); KLEIN, Jens, 69124 Heidelberg (DE)
(74) Representative: Ricker, Mathias
(86) International application number: PCT/EP2001/014045
(87) International publication number: WO 2002/043860

(56) References cited:
- WO-A-00/21658
- WO-A-01/68236
- WO-A-96/03418
- WO-A-96/36436
- WO-A-97/32208
- US-A- 5 985 356
- LOWE G: "COMBINATORIAL CHEMISTRY" CHEMICAL SOCIETY REVIEWS, CHEMICAL SOCIETY, LONDON, GB, 1995, pages 309-317, XP000974445 ISSN: 0306-0012 cited in the application
- MACLEAN ET AL: "Glossary of Terms Used in Combinatorial Chemistry" PURE & APPLIED CHEMISTRY, PERGAMON PRESS, OXFORD, GB, vol. 71, no. 12, December 1999 (1999-12), pages 2349-2365, XP002172624 ISSN: 0033-4545
- LAM K S ET AL: "The One-Bead-One-Compound Combinatorial Library Method" CHEMICAL REVIEWS, AMERICAN CHEMICAL SOCIETY. EASTON, US, vol. 97, no. 2, March 1997 (1997-03), pages 411-448, XP002097485 ISSN: 0009-2665 cited in the application
- FRANCIS M B AND JACOBSEN E N: "Discovery of novel catalysts for alkene epoxidation from metal-binding combinatorial libraries" ANGEWANDTE CHEMIE. INTERNATIONAL EDITION, VERLAG CHEMIE. WEINHEIM, DE, vol. 38, no. 7, 1 April 1999 (1999-04-01), pages 937-941, XP002113539 ISSN: 0570-0833
- ORSCHEL M ET AL: "ERKENNUNG DER SELEKTIVITAET VON OXIDATIONSREAKTIONEN AUF KATALYSATORBIBLIOTHEKEN DURCH ORTSAUFGELOESTE MASSENSPEKTROMETRIE" ANGEWANDTE CHEMIE, VCH VERLAGSGESELLSCHAFT, WEINHEIM, DE, vol. 111, no. 18, 1999, pages 2961-2965, XP000856121 ISSN: 0044-8249
- XIANG X-D: "COMBINATORIAL MATERIALS SYNTHESIS AND SCREENING: AN INTEGRATED MATERIALS CHIP APPORACH TO DISCOVERY AND OPTIMIZATION OF FUNCTIONALMATERIALS" ANNUAL REVIEW OF MATERIALS SCIENCE, ANNUAL REVIEWS INC., PALO ALTO, CA, US, vol. 29, 1999, pages 149-171, XP000981282 ISSN: 0084-6600

## Description

The present invention relates to a process for producing building blocks of a library of materials according to Claim 1.

The present invention is in the field of combinatorial chemistry, in particular the field of producing and testing libraries of materials in the search for performance characteristics of constituents of such libraries of materials. This technical field is described intensively both in the patent literature and in scientific publications.

Within a few years, combinatorial synthesis has developed into an important method in the research of active compounds in the field of pharmaceutical chemistry. In addition to the conventional procedure of synthesizing one substance after another, increasing importance is being gained by methods which are able to prepare simultaneously many substances of defined structure. A combinatorial synthesis is characterized in that, in one synthesis step, a reaction is carried out not with only one synthesis building block, but with many in parallel or in a mixture. In each step, all possible combinations are performed so that with only a few building blocks, a great number of products, a "library of materials", is formed. Such syntheses of libraries of compounds have been known hitherto in the areas of peptide chemistry and biochemistry. This leads to libraries which extend from a few individual compounds to many thousands of substances in mixtures. Thus the spatially separated synthesis of chain-like materials on two-dimensional supports is routinely used in biochemistry and peptide chemistry (G. Jung, A.G. Beck-Sickinger, Angewandte Chemie 1992, 104, pp. 375-391). By means of a combination of solid-phase synthesis and photolithography, it is possible to apply in a spatially separated manner not only photolabile protecting groups, which can be destroyed by irradiation, but also to couple amino acids or ligands successively. The position of each peptide can be established by the masking technique strategy.

In combinatorial peptide chemistry, in addition, what is termed "split and pool" synthesis is widely used and is the subject of numerous publications (F. Balkenhohl et al., Angew. Chemie 1996, 108, 2436-2488, G. Lowe, Chem. Soc. Rev. 1995, 24, 309-317, G. Jung. A.G. Beck-Sickinger, Angew. Chemie 1992, 104, 375-391, M.C. Pirrung, Chem. Rev. 1997, 97, 473-488, US-A 5,556,762). The basis of this synthesis technique is the Merrifield solid-phase synthesis. In this method, for example, functionalized polystyrene beads are used as solid-phase support. In a first step, for example, a great number of polystyrene beads are split among three containers and an amino acid A, B and C is coupled to each of the three subsets. Then the three subsets are recombined (pool) and mixed. This operation is repeated, for example, twice more, so that at the end 27 different permutations of tripeptides have been rapidly and simultaneously synthesized. The purpose of such a procedure can be seen from the fact that when the 20 proteogenic amino acids are used 400 (20² ) different dipeptides, 8000 (20³) different tripeptides, 160 000 (20⁴) different tetrapeptides, 32 000 000 (20⁵) different pentapeptides, etc., may be synthesized. In addition, it is an advantage that the synthesis occurs via successive coupling of covalent bonds and the quantitative yield of the reactions is unambiguous, as a result of which defined molecular units can be synthesized on a defined number of polymer beads.

Further, WO 91/04266 and US 5 160 378 disclose using chemically modified ends of polymer rods for combinatorial synthesis. The peptide synthesis takes place via anchor groups in a defined manner at the end of these rods, the arrangement of which permits the use of conventional microtitre plate formats for synthesis or wash steps by immersion in reagent-filled cavities.

In inorganic chemistry, to date, combinatorial techniques have only been disclosed in the field of two-dimensional arrays.

Thus US 5 985 356 describes the synthesis of materials by coating and testing of two-dimensional material arrays on an inert substrate. By using sputter techniques and using of microstructured masks, whose dimensions in the micrometre range can only be achieved by lithographic techniques, large material yields having a multiplicity of building blocks may be produced in a very small space completely automatically. By successive use and rotation of the masks, differing components can be deposited on defined regions. As a result of the temperature treatment after the deposition, material systems are formed by interdiffusion between the approximately 100 nm thick layers. By using automated systems, these material arrays can be produced repeatedly; in the case of differing conditions of the secondary treatment steps, the effect of the secondary treatment parameters on the formation of new phases and materials can also be controlled (US 6 004 617). Disadvantages are the restriction to a two-dimensional support, the use of small amounts of materials in the microgram range, the bonding to defined support materials, the extremely small dimensions of the individual -material position and the lack of control over the material's morphology.

WO 00/17413 describes the successive addition of suspensions or solutions of individual components to defined regions of a support together with post-conditioning steps, as a result of which direct, spatially resolved, two-dimensional library production is possible. The support material is divided into regions by physical barriers (for example spotting plate array or depressions/boreholes on any desired support). All of these said processes for producing inorganic materials by the route of combinatorial chemistry, however, share the feature that the synthesis is performed on rigid or semi-rigid two-dimensional predefined surfaces and that the number of materials produced is a direct function of the working steps, or dispensing steps or deposition steps associated with the production.

The object of the present invention was therefore to extend the techniques known in combinatorial chemistry to provide a process for producing multicomponent systems with components that are not tied to a two-dimensional substrate comprising materials, such as catalysts, that may, in fact, be produced as unsupported bulk-phase bodies. Only in three-dimensional embodiments is it possible to create reaction zones or diffusion zones or concentration gradients or any combination thereof and to thereby control the activity or selectivity of the catalyst body. Obviously, this is not possible for homogeneous films or multilayers on a substrate. A further object of the present invention is to establish a process for testing materials of such a library of materials, with which it is possible to accelerate and optimize the synthesis and characterization of libraries of materials in comparison with the abovementioned processes and apparatuses, and thus to obtain libraries of materials which are further improved with respect to the rapidity and bandwidth of the synthesis of multicomponent systems and using which libraries having up to more than 10⁶ building blocks can be produced in a very efficient manner.

These and other objects are achieved by the inventive process for producing a multiplicity of building blocks of a library of materials, in which the inventive process comprises a sequence of the following steps:
(2) contacting all of a number t₁ₘ of support bodies of the kind T1 of at least one subset M₁ₘ with at least one first substance of the kind S₁ₛ, and all of a number t₁ₙ of support bodies of the kind T1 that are part of at least one other subset M₁ₘ with at least one other first substance S₁ₛ characterized in that the support bodies are porous and that at least parts of the substance penetrates into at least parts of the bulk of the support bodies, and where s, t₁, and m are mutually independent integers ≥ 1;
(3) combining complete subsets M₁ₘ to result in one or more second sets M₂ₙ containing a number t₂ₙ of support bodies of the kind T1, where n and t₂ are integers ≥1 and n < m.

The process according to the present invention has the following further step (1), which is carried out before steps (2) and (3):
(1) dividing a first set M₁ containing a number t₁ of support bodies of the kind T1 into a number k of first subsets M₁ₘ containing a number t₁ₘ of support bodies, where m and t₁ independently of one another are integers > 1, and t₁ ≥ k with k being an integer≥ 2.

The inventive process comprises the further step (0) in which the first set M₁ of the number t₁ of support bodies of the kind T1 is contacted before step (1) with at least one substance zero of the kind S₀ₛ, where s has the above meaning.

The support bodies can also originate from other sequences carried out independently or in parallel.

In addition, one embodiment relates to a process of the type in question here, in which identical or different support bodies T2Y, which are identical to or different from the support bodies T1 or T1X, where Y is an integer≥1, are added to at least one of the subsets M₁ₘ before and/or after and/or during the respective steps (I), (0), (1), (2) or (3) or the totality of the steps (I) and (0) to (3) or sequence of steps.

Furthermore, a freely selectable number of support bodies T1 and/or T1X and/or T2Y support bodies and/or building blocks can be taken off from and/or added to at least one of the subsets M₁ₘ before and/or after and/or during the steps (I), (0), (1), (2) and/or (3).

By means of the present process, the building blocks, preferably three-dimensional bodies, can be varied to contain materials selected from the following group: heterogeneous or heterogenized catalysts, luminophores, thermoelectric, piezoelectric, semiconducting, electrooptical, superconducting or magnetic substances or mixtures of two or more of these substances, in particular intermetallic compounds, oxides, nitrides, carbides, oxide mixtures, mixed oxides, ionic or covalent compounds of metals and/or non-metals, metal alloys, ceramics, active carbon, and composite materials, dielectrics, thermoelectrics, magnetoresistive and magnetooptical materials, substances for feed and feed supplements, substances for foods and food supplements and cosmetics and mixtures of two or more oxides. The materials can be varied as desired, for example with respect to their stoichiometry, and then the building blocks or, for example, their stoichiometry, most suited to the respective use can be found. It is also possible that via a suitable different element composition, all variants can be tested of a multiplicity of building blocks, for example catalysts, which, although they are substantially similar, differ in their elements by at least one element.

Preferably, the subsets and/or sets produced in the context of the present process are the same size or different sizes. This leads to the fact that differing amounts of different catalyst variants and materials can be produced in a simple manner.

According to the present invention, the building blocks are inorganic materials, since in the field of inorganic catalyst research, to date actual combinatorial synthesis methods have not been able to be used satisfactorily.

According to the present invention, the support bodies are porous bodies. Such porous bodies can have micropores, mesopores, macropores according to the IUPAC definition or a combination of two or more thereof, in which case the pore distribution can be monomodal, bimodal or multimodal. Preferably, the bodies have a multimodal pore distribution having a high proportion, that is to say more than 50%, of macropores. Porous bodies according to the present invention are: foamed ceramics, metallic foams, metallic or ceramic monoliths, hydrogels, sintered glasses or sintered ceramics.

Solid or porous bodies, for example metal bodies, ceramics, glasses, composites, which are provided with an appropriate pore structure by suitable processes, can also be used. Such processes can be: drilling processes, cutting processes, erosion processes, etching processes, laser lithography processes or screen printing processes.

Bodies according to the present invention have a BET surface area of 1 to 1 000 m²/g, preferably 2 to 800 m²/g, and in particular 3 to 100 m²/g.

In one embodiment, the support bodies used can be produced per se during a treatment step, for example starting from a suitable precursor, for example a powder, by means of a suitable process, for example disintegration, sol-gel processes, precipitation, melting and solidification, spraying and coating. This treatment step is carried out before the start of the actual process.

In accordance with the present invention the support bodies are altered during any of the steps mentioned above or in a working-up procedure occurring after completion of the steps mentioned above wherein the term "altered" present relates to any chemical or physical-chemical change, including the formation of covalent or ionic bonds, or any combination thereof, that the support bodies are subjected to, including but not limited to a complete or partial reaction of the support body material with any or all of the substances that it is brought in contact with during any of the steps mentioned above.

The substances can be applied to the support bodies in dissolved, suspended, emulsified, dispersed or molten form. The substances can be brought into contact with each suitable solvent and then applied, for example, by impregnation, spraying, sponging or immersion. Further processes for applying the substances are powder coating processes and methods for applying microencapsulated substances.

An additional degree of freedom can be generated by inhomogeneous application of substances, for example in the form of a solution, to a set or subset of support bodies. In this embodiment, the solution volume applied is less than the liquid absorption capacity of the support bodies. As a result, advantageously not all support bodies are uniformly impregnated with the solution. Therefore, gradients of the respective substance are generated on each application step.

In addition, it is possible to achieve an inhomogeneous application of substances by covering some of the set of support bodies, for example, and thus contacting only a subgroup with the substance. For the contacting, local spray systems, for example, are suitable, preferably with a mask or diaphragm to cover the remaining support bodies.

Preferably, the support volume, that is to say the fluid absorption capacity of the support bodies, is adjustable. This can be adjusted, for example, via conditioning with an inert gas, vapor or a liquid for example water vapor. Thus the absorption capacity of each support body can be adjusted exactly, so that only a maximum loading with a substance solution, which loading can be set in advance, is possible.

It is advantageous if the support bodies, after each application of substances, are redistributed (mix-split). Thus, in the context of the repeated sequences according to the process, all polynary systems, that is to say binary, ternary, quaternary and higher systems, may be produced within a single rapid combinatorial synthesis.

Preferably, the sequence of the inventive process is repeated and/or permuted as often as desired, so that highly complex polynary systems are thus also accessible in a simple manner. In particular, it is further preferred, that after each step of application of substances, a treatment step, for example a drying step, follows. As a result, in a simple manner, the utilization of 100% of the support volume is made possible in each application.

It is also preferred that after at least one step of the sequence or of the repeated sequences a precipitant or a mineralizing agent is added, so that in this manner coprecipitation on or in the support bodies can be carried out. Suitable precipitants can be: inorganic or organic bases and/or acids. Suitable mineralizers are, for example, halides.

It is further preferred that the applied substances react with one another before, during, or after each application step, or else not until after all application steps, and thus complex polynary systems of differing stoichiometric composition are thus possible with subsequent variation of their chemical and/or physical properties.

It is further preferred that the support bodies are functionalized. Such functionalizations can change the physicochemical characteristics of the support body. Such characteristics can be: polarity, acidity, basicity, steric characteristics, complexing characteristics, electronic and ionic characteristics and the pore structure. Via a functionalization as desired, for example by applying organic adhesion promoters or compounds which make possible improved solubility of applied substances, as many substances as desired which differ in their physical characteristics can be applied, for example hydrophobic and hydrophilic substances, lipophilic and lipophobic substances. Suitable processes for this are all processes known to those skilled in the art. By this means, for example, by applying a substance, a further substance, which owing to the functionalization, is already applied, can be dissolved out by the applied substance or can react with the applied substance and thus in a simple manner even more complex precursor compounds can be applied to the support body.

One embodiment additionally comprises a process for identifying different building blocks of a library of materials by each building block being provided with an individualizable coding. Since the present invention is based on a rapid and arbitrary synthesis of multicomponent systems which have a great multiplicity with respect to element composition and element distribution, it is important that at least individual generations are labeled during synthesis.

It is preferred that the coding is substantially chemically inert and is not damaged by any process step. This can be achieved, for example, by adding, in varying amounts, one or more elements which are inert with respect to the process steps. By detection of this specific element after the test, unambiguous identification of the material is then possible. It is of importance in this "chemical encoding" that the component(s) should not be volatile. Therefore, for example, halogens, arsenic, selenium, tellurium, cadmium, lead or mercury are only of limited suitability.

Particularly suitable and preferred is encoding by radioactivity or gamma radiation in which the corresponding elements are introduced into the material system at each generation. By detection of the radiation using a suitable detector, such library components of this generation can be identified. Further preference is given to encoding via nanomaterials, for example chemically inert cluster compounds, for example rare earth oxides, TiO₂ ZrO₂ which have, for example, fluorescence activity or phosphorescence activity.

Examples of physicochemical measurement methods for decoding the information are X-ray diffraction, X-ray fluorescence, measurement of high-energy radiation, for example radioactivity, measurement of optical characteristics, for example absorption, fluorescence or phosphorescence characteristics.

### Preferably, the methods are selected from:

RFA, UV/VIS spectroscopy, detection of high-energy radiation, NMR spectroscopy, ESR spectroscopy, Mössbauer spectroscopy, SIMS and optical methods.

In addition, the coding is preferably based on a characteristic of the support body.

Another embodiment additionally comprises a process for determining physicochemical characteristics of building blocks of the inventive library of materials, which process comprises the following steps:
(a) determination of at least one performance characteristic and/or property of at least one building block using at least one sensor and if appropriate
(b) determination of at least one further performance characteristic and/or property of the at least one building block using at least one further sensor.

Preferably, the second parameter is only determined for the building blocks in the library of materials for which the measurements of the first parameter have already given an indication of a desired performance characteristic and/or property.

Further preferably, the building blocks are selected automatically for further measurement by a data processing system.

Preferably building blocks or materials which occur in the solid state and are potentially suitable as heterogeneous catalysts are prepared, and if appropriate tested with respect to their performance characteristics. Thus these materials are heterogeneous catalysts and/or their precursors, further preferably inorganic heterogeneous catalysts and/or their precursors, and in particular solid catalysts or supported catalysts and/or their precursors.

In the context of the present process, the individual materials can be identical or different from one another.

Firstly, if necessary, a part of the library of materials, for example in the case of a catalyst, can be activated. This can be carried out by thermal treatment under inert gases or reactive gases or other physical and/or chemical treatments. The building blocks are then brought to a desired reaction temperature and then a fluid starting material, which can be an individual compound or a mixture of two or more compounds, is passed through or along one, a plurality or all of the parts of the library of materials.

The fluid starting material which consists of one or more reactants is generally liquid, or preferably gaseous. A mixture of liquid and gaseous phases is conceivable as well. Preferably, testing of, for example oxidation catalysts, is performed by contacting, in parallel or sequentially, individual, a plurality, or all, sections of the library of materials with a gas mixture of one or more saturated, unsaturated or polyunsaturated organic starting materials. Those which may be mentioned here are, for example, hydrocarbons, alcohols, aldehydes etc., and oxygen-containing gases, for example air, O₂, N₂O NO, NO₂, O₃ and/or, for example, hydrogen. Furthermore, an inert gas, for example nitrogen or a noble gas can also be present. The reactions are generally carried out at temperatures from 20 to 1200°C, preferably at 50 to 800°C, and in particular at 80 to 600°C, in which case the separate removal, which is carried out in parallel or successively, of the respective gas streams of the individual parts, a plurality of parts or all parts is ensured by means of a suitable device

Thus an additional embodiment relates to a process in which, before step b), a starting material is introduced into at least two parts of the library of materials which are separated from one another to carry out a chemical and/or physical reaction in the presence of at least one material of the respective part and, after flow through the section, an effluent stream is obtained.

The resultant effluent stream comprises at least one reaction product which is then collected either from individual sections or a plurality of sections of the library of materials and is preferably analyzed separately, successively or preferably in parallel, if analysis of the exhaust stream is required after the inventive process in the respective part.

A plurality of reactions, each interrupted by a purge step with a purge gas can also be carried out and analyzed successively at the same or different temperatures. Obviously, identical reactions at different temperatures are also possible.

Preferably, at the start of the process, the collected effluent stream of the entire library is analyzed in order to establish whether a reaction has taken place at all. In this manner, groups of building blocks may be analyzed very rapidly to establish whether they have any useful characteristics, for example catalytic characteristics, at all. Obviously, after carrying out this coarse screening, again individual groups of building blocks can be analyzed together, in order again to establish which group of building blocks, if a plurality of such groups of building blocks are present in the library of materials, have catalytic characteristics.

The present invention permits automated production and catalytic testing for the purpose of high throughput and screening of, for example, heterogeneous catalysts for chemical reactions, in particular for reactions in the gas phase, very particularly for partial oxidations of hydrocarbons in the gas phase with molecular oxygen (gas phase oxidations).

Reactions and conversions suitable for study are described in G. Ertl, H. Knötzinger, J. Waldkamp (editors): "Handbook of heterogeneous catalysis", Wiley VCH, Weinheim, 1997. Examples of suitable reactions are principally listed in this reference in Volumes 4 and 5 and in Numbers 1 to 4.

The effluent lines of the effluent streams of the respectively selected sections comprise at least one reaction product and/or the starting material which is preferably obtained separately from the respective sections. This is preferably achieved via a device which is connected gas-tightly to the respective sections. In particular, devices which may be mentioned are: sample removal using suitable flow guides, for example valve circuits and mobile capillary systems (sniffing apparatuses). In a particularly preferred embodiment, sniffing apparatuses are used which have a spatially localized, for example point-shaped, heat source. This together with the fact that the heat source is coupled to the sniffing, apparatus permits selective heating of the part of the library of materials under test and allows a reaction to be initiated only in this region. The individual effluent streams of the individual sections, a plurality of sections or all sections can be taken off separately here and then analyzed separately via a valve circuit.

The mechanically movable sniffing apparatus, which is, for example, computer-controlled, comprises a sniffing line or sniffing capillary to the effluent stream to be taken off which is essentially automatically positioned on, in and/or above the exit of the respective section and then takes off the effluent stream. Details with respect to the disposition of such an apparatus may be taken from WO 99/41005.

In principle there is freedom in the choice of the measurement method, but it should be in this case a relatively rapid and simple measurement method, since a great number of sections are to be analyzed. The purpose of this first measurement is a preferred preselection of those parts which must be analyzed further.

In particular, sensors which may be mentioned are: infrared thermography, infrared thermography in combination with mass spectrometry, mass spectrometry, GC, LC, HPLC, micro GC, dispersive FTIR spectroscopy, microwave spectroscopy, Raman spectroscopy, NIR spectroscopy, UV spectroscopy, UV-VIS spectroscopy, NMR spectroscopy, ESR spectroscopy, microwave spectroscopy, GC-MS, infrared thermography/Raman spectroscopy, infrared thermography/dispersive FTIR spectroscopy, color detection using a chemical indicator/MS, color detection using a chemical indicator/GCMS, color detection using a chemical indicator/dispersive FTIR spectroscopy, photoacoustic analysis, chemical or electrochemical sensors and tomographic NMR and ESR methods.
Particular preference is given to mass spectrometry and measurement methods coupled to it, and to tomographic NMR and ESR methods, optionally using specific probe molecules.

Further preferably, infrared thermography is used, which may be simply implemented using an infrared camera. In this case the temperature development of the individual parts may be taken from the recorded infrared image, preferably using digital image processing. In the case of a small number of parts, if appropriate, a temperature sensor can be assigned to each individual part, for example a pyrometric element or a thermocouple. The results of the temperature measurement for the respective distances can all be sent to a data processing system which pref erably controls the inventive process. Further details of this method may be taken from WO 99/34206 and DE-A-100 12 847.5.

In order substantially to eliminate interfering influences, the parts containing the sections to be tested should preferably be situated in a thermally insulated housing having a controlled atmosphere. If an infrared camera is used, this should preferably be situated outside the housing, with observation of the building blocks being made possible by infrared-transparent windows, for example made of sapphire, zinc sulphite, barium difluoride, sodium chloride, etc. On the basis of the results of the measurement of the first parameter, using a data processing system or a computer, the sections are chosen for which at least one further performance characteristic can be measured. In this case, also, differing selection criteria are conceivable. Firstly, those sections can be selected for which the first parameter is better than a predefined limit value, secondly, a predefined percentage of the best of all sections or materials of a support body can alternatively be selected for measurement of a second parameter. The said minimum requirements and the amount of sections to be selected depends firstly on the respective quality requirements of the materials to be tested and secondly on the time which is available for testing the support materials.

If a limit value is preset with respect to the minimum requirement of the first measured value, this need not be constant for all parts, but it can be preset, for example, as a function of other characteristics of the respective building blocks of the individual parts of the library of materials.

The at least one further parameter (performance characteristics and/or property) is preferably measured at the effluent stream of the selected sections. In principle, the further sensor is subject to no restriction, provided that it is suitable for measuring a further parameter which gives indications of a further characteristic of the building block under test.

In principle, as further sensor, a process mentioned above for the first sensor can be employed, in which case the first and further sensor are identical to or different from one another, preferably different from one another. Preferably, this further sensor is based on a spectroscopic method which is selected from the group consisting of mass spectrometry, gas chromatography, GCMS spectroscopy, Raman spectroscopy, infrared spectroscopy, UV-VIS spectroscopy, NMR spectroscopy, fluorescence spectroscopy, ESR spectroscopy, NMR tomography and ESR tomography and Mössbauer spectroscopy.

On the basis of these preferred techniques, more precise information on the effluent stream of the respective sections or building blocks may be obtained. Using these spectroscopic methods, the concentration of a sought-after product or the concentration of parallel products and the residual concentration of the starting materials can be determined, from which, for example, for catalytic building blocks, information on selectivity may be derived.

For mass spectroscopy, preferably a quadrupole mass spectrometer is used, although TOF mass spectrometers are conceivable. The effluent stream of the sections under test is fed to the mass spectrometer or other sensors preferably via a pipe system. Further mass spectrometric arrangements which can be used are MS-MS couplings.

Preferably, the analysis is controlled by a data processing system, so that suitable parts of the library of materials can be identified particularly simply and rapidly. It is advantageously possible here to analyze specifically one constituent of a single section, since in the case of such abovementioned measurement methods, specific selection of a small region from a larger region is possible.

The terms used in the context of the present invention shall be explained at this point:
- Contacting:: In the context of the present invention, contacting is taken to mean that a substance is brought into direct contact with at least one porous support body leading to at least one of the following steps: diffusion or capillary action of the substance into the porous body, reaction of the substance with at least parts of the support body, transport within the porous body, including mass transport, physical alteration of the support body or of the substance or of both, for example by swelling or altering the pore structure
- Building block:: Unit which is a member of a library of materials and which can consist of one or more components or materials.
- Building block composition:: The term "building block composition" used in the context of the invention comprises the stoichiometric and the element composition of the materials under test conditions which can differ from material to material, as well as the spatial distribution of substances within a building block. Thus it is possible according to the invention to produce and test libraries of materials which consist of materials in which, although they are identical with respect to their element composition, the stoichiometric composition of the elements making up the material differ between the individual materials; in addition, it is possible that the library of materials is made up of materials which are each different with respect to their element composition; obviously it is also possible for the individual materials to differ in their stoichiometric and element composition; in addition it is possible that the library of materials is made up of building blocks which are identical with respect to their element composition and stoichiometric composition, but differ with respect to the physical or chemical or physicochemical characteristics as a consequence of a treatment step. The term "element" used here relates in this case to elements of the Periodic Table of the Elements.
- Treatment step:: Physical or chemical or physical and chemical treatment of at least a part of the inventively used building blocks, materials, substances or support bodies. In this case a set of support bodies can also be treated in such a manner that the abovementioned treatments are not applied uniformly over all support bodies. Thus it is possible, for example, that a portion of the set of the support bodies is subjected to a chemical treatment, while another portion of the set of support bodies is subjected to a physical treatment, without the other portion in each case "seeing" the other treatment. In addition, it is possible to establish a gradient of the respective treatment over the set of support bodies, for example to carry out a thermal treatment in a tubular kiln, at one end of which a temperature of, for example, 500°C is applied and at the other end of which a temperature of, for example, 1000°C is applied, the temperature changing from one end to the other continuously or stepwise. Examples of physical treatments are treatments involving temperature, pressure or light, and examples of chemical treatments are contacting with reactive gases, for example hydrogen, ammonia, hydrochloric acid, reaction solutions, for example precipitants, mineralizing agents, adhesion promoters, binders and hydrophobicizing agents, examples of physicochemical treatments are contacting with, for example, water vapour or treatment with reactive gases with simultaneous irradiation with light.
- Characteristics of the support bodies:: Characteristics of the support bodies can be, for example: shape, density, porosity, surface properties, plasticity, chemical composition, size, morphology.
- Property:: The term "property" designates physical, chemical or physicochemical states of the individual materials within the library of materials; examples which may be mentioned here are: oxidation state, crystallinity, etc.
- Introduction:: This term designates any type of feed of (chemical) substances in volumes, for example pouring, spraying, etc.
- Fluid:: A fluid is defined as a medium whose flowability is proportional to the expression e^{-ΔE/RT}, where ΔE is the energy which must be overcome in order for the medium to flow. These include, for example, liquids, gases, waxes, dispersions, fats, suspensions, melts, pulverulent solids etc. If the medium is present in liquid form, this is also taken to mean multiphase liquid systems.
- Coding:: Coding, in the context of the present invention, means that a physical and/or chemical characteristic of the support body is accessible to measurement. Examples of such characteristics which may be mentioned are: shape, density, porosity, surface properties, plasticity, elasticity, chemical characteristics, composition, concentration, optical and electronic characteristics.
- Material:: Preferably non-gaseous substances, for example solids, oxides, salts, sols, gels, waxy substances or substance mixtures, dispersions, emulsions, suspensions and solids. These can be molecular and non-molecular compounds, formulations, mixtures, where the term "nonmolecular" defines substances which can be continuously optimized or changed, in contrast to "molecular" substances whose structural expression can only be changed via a variation in discrete states, for example that is by varying a substitution pattern.
- Library of materials:: This designates an arrangement comprising at least two, that is a plurality, preferably at least 1 000, further preferably at least 100 000, in particular at least 10 000 000, and further preferably at least 1 000 000 000 substances or chemical compounds, mixtures of chemical compounds, formulations, which are termed "*building blocks*" in the context of the present invention.
- Set:: The term "set" defines a composition of support bodies.
- Performance characteristic:: This term designates measurable characteristics of the materials of the library of materials, such as catalytic activity or catalytic selectivity, which are determined using suitable sensors. Examples of these are given in the description.
- Substance:: Chemical or biological entity, material, component, precursor or mixtures of two or more thereof.
- Subset:: A "subset" is a collection of support bodies which is spatially separate from other subsets and obtained by dividing a set of support bodies. According to the present invention the number of support bodies in the subset is always less than the number of support bodies in the set.
- Partial volume:: A "partial volume" is an amount of fluid obtained by dividing a volume of fluid that is less than the amount of fluid in the volume.
- Support bodies:: This term comprises in principle all three-dimensional devices and bodies that have pores or boreholes or channels. The support body must be suitable to be brought in immediate and thorough contact with at least parts of at least one of the added substances. The term support body comprises pristine support bodies that are added to the library of materials as well as any support body during any step in the process of manufacturing a library of materials according to the invention, be it a contacting, conditioning, treatment or any other step. There are no restrictions with respect to the external shape of the support bodies, provided that it is a three-dimensional device or a three-dimensional body. Thus the support body can have the shape of a sphere or hollow sphere, an ellipsoidal body, a parallelepiped, a cube, a cylinder, a prism or a tetrahedron.
- Subgroup:: A "subgroup" is a collection of support bodies which is not spatially separated from other subgroups and is obtained by dividing a set and/or subset of support bodies, the number of support bodies in the subgroup always being less than the number of support bodies in the set.
- Subdivided volume:: A "subdivided volume" is an amount of fluid which is less than the amount of fluid in a partial volume, and which can be taken off from or added to a partial volume.
- Mixing:: "Mixing" in the context of the invention, in addition to the mixing of at least two solutions, also means that the position of the support bodies within a vessel can be changed arbitrarily (local permutation).
- Interchange:: "Interchange" in the context of the invention means spatial permutation of support bodies.
- Volume:: The term "volume" means the totality of the fluid medium.

Further advantages and aspects of the invention result from the description, the exemplary embodiments and the accompanying drawings.

Clearly, the abovementioned features and the features which are still to be described below can be used not only in the combination specified in each case, but also in other combinations or else alone, without departing from the context of the present invention.

The invention is illustrated diagrammatically in the drawings on the basis of exemplary embodiments and is described in detail below with reference to the drawings.

Fig. 1 shows diagrammatically the inventive process according to Claim 1.

Figs. 2 to 8 show analytical results carried out on building blocks of an inventive library of materials produced by the process according to Claim 1.

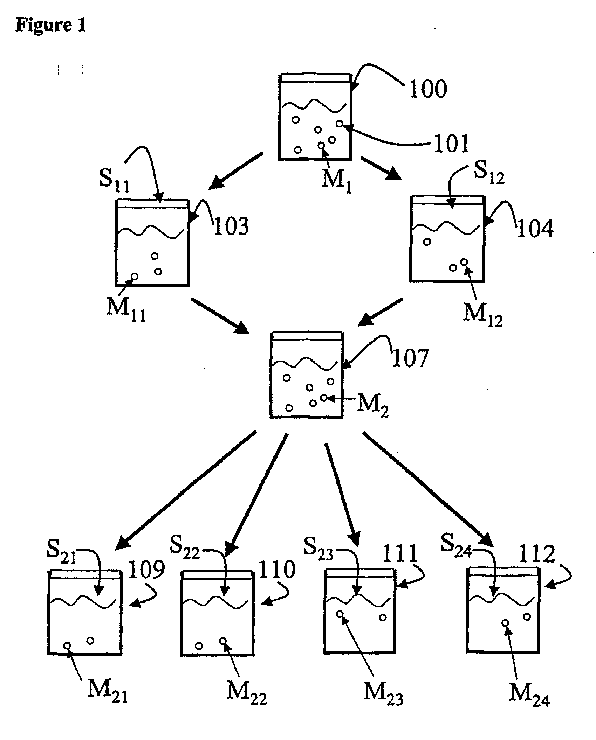

Fig. 1 shows by way of example in a diagrammatic depiction the inventive process having the sequence of steps (0), (1), (2), (3), (1), (2). In a vessel 100 is situated a solution of a first substance 101 into which a set M1 of t₁, for example porous support bodies T1 of aluminum oxide, preferably beads, is introduced, After contacting the set M1, the set M1 is divided into the first two subsets M₁₁ and M₁₂ which are distributed into containers 103 and 104 and are then contacted with solutions of substances S₁₂ and S₁₁.

After being contacted with the substances S₁₁ and S₁₂, the first two subsets M₁₁ and M₁₂ are combined to form a new set M₂ and, in the container 107, if appropriate, are contacted with a further substance which is not shown in Fig. 1. Also, obviously, further s contacting with the substances S₁₁ and S₁₂ can be performed, or materials can be taken off from the sets M₁₁ and M₁₂.

The set M2 is then divided into four second subsets M₂₁ , M₂₂, M₂₃ and M₂₄ which are contacted in vessels 109, 110, 111 and 112 with solutions of the substances S₂₁, S₂₂, S₂₃ and S₂₄. The subsets M₂₁ to M₂₄ are then isolated and the isolated support bodies contacted with the corresponding substances are subjected to a reactive treatment, for example a drying treatment or irradiation treatment.

This may be described in more detail with reference to examples below.

### Examples

### Example 1

In Example 1, the following aqueous impregnation solutions of substances were used:

**Table 1**

| **Substance** | **Concentration** | **Volume applied** |
|---|---|---|
| Bi(NO₃)₃ | 1.25 M | 500 µl |
| Cu(NO₃)₂ | 4.6 M | 250 µl |
| Co(NO₃)₃ | 4 M | 250 µl |
| Mg(NO₃)₂ | 2.85 M | 500 µl |
| Fe(NO₃)₂ | 3 M | 250 µl |
| V₂(C₂H₄O₄)₅ | 0.45 M | 250 µl |
| HAuCL₄ | 0.22 M | 500 µl |

In a 1st step (1st generation), 500 µl of Bi solution were pipetted to 1 g of γ-aluminum oxide beads (obtained from CONDEA, 0.5 mm in diameter) evenly distributed over the surface in a porcelain dish. After intensive mixing, the set was halved and transferred to two new porcelain dishes; the first half of the beads was contacted with cobalt solution (= 2nd generation Bi-Co), and the second half with copper solution (= 2nd generation Bi-Cu). The two sets of the second generation were combined on a new dish, mixed and contacted with the magnesium solution (= 3rd generation Bi-Co-Cu-Mg; not shown in Table 2). The mixed support bead set was then halved again and divided among two dishes; one half was contacted with a vanadium precursor solution (= 4th generation Bi-Co-Cu-Mg-V), and the second with iron solution (= 4th generation Bi-Co-Cu-Mg-Fe). Both sets were recombined, intensively mixed and in the last step were contacted with the gold solution (= final generation Bi-Co-Cu-Mg-Fe-V-Au).

Finally a drying step was carried out: the final generation was treated for 12 h at 80°C in a drying cabinet. To monitor the result, some beads of each generation were taken off and studied by X-ray fluorescence analysis (µ-EDX). The results were summarized in Table 2 below. All data in per cent by weight (WT%) are based on the corresponding stable oxides of the metals. The third generation (Bi-Co-Cu-Mg) was not listed, since magnesium is not detectable as a light metal with the X-ray fluorescence analysis used.
A seven-component system ultimately results on aluminum oxide supports. At each synthesis step, as shown in Table 2, a number of beads were taken off and dried for 12 h at 80°C. Table 2 shows that all binary to heptary systems can be obtained in a simple manner. Each bead, considered statistically, has a different composition. Owing to the manner of liquid application, after each synthesis step there also exists a set of non-reacted beads, so that in addition to the desired heptary systems, all binary, ternary etc. component systems are also produced in parallel therewith. These subgroups can be specifically produced by taking out a bead set at a corresponding point in the production sequence.

The results are shown in Table 2 below:

**Table 2:**

| Results of the µ-EDX (micro X-ray fluorescence analysis [micro-EDX]) on randomly selected support beads of generations 1, 2, 4 and of the final generation from Example 1: | | |
|---|---|---|
| **1st generation: Bi** | | |
| **1st bead** | **Oxides:** | **% by weight** |
| | Al | 98.49 |
| | Bi | 1.4 |
| | | |

| **2nd bead** | **Oxides:** | **% by weight** |
|---|---|---|
| | Al | 99.07 |
| | Bi | 0.79 |
| | | |

| **2nd generation: Bi-Co** | | |
|---|---|---|
| **1st bead** | **Oxides:** | **% by weight** |
| | Al | 96.85 |
| | Co | 3 |
| | Bi | 0.03 |
| | | |

| **2nd bead** | **Oxides:** | **% by weight** |
|---|---|---|
| | Al | 99.65 |
| | Co | 0.24 |
| | Bi | 0.02 |
| | | |

| **3rd bead** | **Oxides:** | **% by weight** |
|---|---|---|
| | Al | 98.05 |
| | Co | 1.83 |
| | Bi | 0.03 |
| | | |

| **4th bead** | **Oxides:** | **% by weight** |
|---|---|---|
| | Al | 98.12 |
| | Co | 0.6 |
| | Bi | 1.22 |
| | | |

| **2nd generation Bi-Co** | | |
|---|---|---|
| **5th bead** | **Oxides:** | **% by weight** |
| | Al | 97.59 |
| | Co | 1.59 |
| | Bi | 0.73 |
| | | |

| **2nd generation: Bi-Cu** | | |
|---|---|---|
| **1st bead** | **Oxides:** | **% by weight** |
| | Al | 94.89 |
| | Cu | 4.97 |
| | Bi | 0.04 |
| | | |

| **2nd bead** | **Oxides:** | **% by weight** |
|---|---|---|
| | Al | 98.19 |
| | Cu | 1.02 |
| | Bi | 0.68 |
| | | |

| **3rd bead** | **Oxides:** | **% by weight** |
|---|---|---|
| | Al | 99.79 |
| | Cu | 0.04 |
| | Bi | 0.04 |
| | | |

| **4th bead** | **Oxides:** | **% by weight** |
|---|---|---|
| | Al | 99.75 |
| | Cu | 0.13 |
| | Bi | 0.06 |
| | | |

| **5th bead** | **Oxides:** | **% by weight** |
|---|---|---|
| | Al | 98.03 |
| | Cu | 1.13 |
| | Bi | 0.77 |
| | | |

| **4th generation Bi-Co-Cu-Mg-Fe** | | |
|---|---|---|
| **1 st bead** | **Oxides:** | **% by weight** |
| | Al | 94 |
| | Fe | 4.9 |
| | Co | 0.45 |
| | | |

| **4th generation: Bi-Co-Cu-Mg-Fe** | | |
|---|---|---|
| | Cu | 0.47 |
| | Bi | 0.1 |
| | | |

| **2nd bead** | **Oxides:** | **% by weight** |
|---|---|---|
| | Al | 94.03 |
| | Fe | 1.39 |
| | Co | 0.77 |
| | Cu | 3.66 |
| | Bi | 0.1 |
| | | |

| **3rd bead** | **Oxides:** | **% by weight** |
|---|---|---|
| | Al | 93.9 |
| | Fe | 3.05 |
| | Co | 0.29 |
| | Cu | 2.57 |
| | Bi | 0.11 |
| | | |

| **4th bead** | **Oxides:** | **% by weight** |
|---|---|---|
| | Al | 95.31 |
| | Fe | 0.29 |
| | Co | 4.1 |
| | Cu | 0.19 |
| | Bi | 0.05 |
| | | |

| **5th bead** | **Oxides:** | **% by weight** |
|---|---|---|
| | Al | 97.58 |
| | Fe | 1.83 |
| | Co | 0.14 |
| | Cu | 0.34 |
| | Bi | 0.05 |

| **4th generation: Bi-Co-Cu-Mg-V** | | |
|---|---|---|
| **1st bead** | **Oxides:** | **% by weight** |
| | Al | 99.61 |
| | V | 0.08 |
| | Co | 0.04 |
| | Cu | 0.22 |
| | Bi | 0.02 |
| | | |

| **2nd bead** | **Oxides:** | **% by weight** |
|---|---|---|
| | A1 | 96.48 |
| | V | 2.81 |
| | Co | 0.29 |
| | Cu | 0.36 |
| | Bi | 0.03 |
| | | |

| **3rd bead** | **Oxides:** | **% by weight** |
|---|---|---|
| | Al | 94.47 |
| | V | 3.89 |
| | Co | 1.23 |
| | Cu | 0.25 |
| | Bi | 0.07 |
| | | |

| **4th bead** | **Oxides:** | **% by weight** |
|---|---|---|
| | Al | 94.91 |
| | V | 2.45 |
| | Co | 2.22 |
| | Cu | 0.23 |
| | Bi | 0.14 |
| | | |

| **5th bead** | **Oxides:** | **% by weight** |
|---|---|---|
| | Al | 92.11 |
| | V | 4.69 |

| **4th generation: Bi-Co-Cu-Mg-V** | | |
|---|---|---|
| | Co | 0.52 |
| | Cu | 1.18 |
| | Bi | 1.46 |
| | Co | 1.67 |
| | Cu | 1.06 |
| | Au | 0.37 |
| | Bi | 0.74 |
| | | |

| **Final generation: Bi-Cu-Co-Mg-Fe-V-Au** | | |
|---|---|---|
| **1st bead** | **Oxides:** | **% by weight** |
| | Al | 93.83 |
| | V | 0.5 |
| | Fe | 1.83 |
| | Co | 1.67 |
| | Cu | 1.06 |
| | Au | 0.37 |
| | Bi | 0.74 |
| | | |

| **2nd bead** | **Oxides:** | **% by weight** |
|---|---|---|
| | Al | 92.59 |
| | V | 0.53 |
| | Fe | 0.44 |
| | Co | 0.43 |
| | Cu | 1.8 |
| | Au | 0.24 |
| | Bi | 3.98 |
| | | |

| **3rd bead** | **Oxides:** | **% by weight** |
|---|---|---|
| | Al | 96.39 |

| **Final generation: Bi-Cu-Co-Mg-Fe-V-Au** | | |
|---|---|---|
| | V | 0.19 |
| | Fe | 2.43 |
| | Co | 0.2 |
| | Cu | 0.6 |
| | Au | 0.04 |
| | Bi | 0.15 |
| | | |

| **4th bead** | **Oxides:** | **% by weight** |
|---|---|---|
| | Al | 97.75 |
| | V | 0.35 |
| | Fe | 0.3 |
| | Co | 0.21 |
| | Cu | 1.16 |
| | Au | 0.11 |
| | Bi | 0.13 |
| | | |

| **5th bead** | **Oxides:** | **% by weight** |
|---|---|---|
| | Al | 94.87 |
| | V | 0.19 |
| | Fe | 2.71 |
| | Co | 0.63 |
| | Cu | 1.23 |
| | Au | 0.15 |
| | Bi | 0.23 |
| | | |

| **6th bead** | **Oxides:** | **% by weight** |
|---|---|---|
| | Al | 97.28 |
| | V | 0.2 |
| | Fe | 0.36 |
| | Co | 0.23 |
| | Cu | 1 |
| | Au | 0.04 |

| **Final generation: Bi-Cu-Co-Mg-Fe-V-Au** | | |
|---|---|---|
| | Bi | 0.88 |
| | | |

| **7th bead** | **Oxides:** | **% by weight** |
|---|---|---|
| | Al | 98.17 |
| | V | 0.1 |
| | Fe | 1.04 |
| | Co | 0.16 |
| | Cu | 0.44 |
| | Au | 0.01 |
| | Bi | 0.09 |
| | | |

| **8th bead** | **Oxides:** | **% by weight** |
|---|---|---|
| | Al | 94.98 |
| | V | 1.65 |
| | Fe | 0.47 |
| | Co | 0.65 |
| | Cu | 2.05 |
| | Au | 0.08 |
| | Bi | 0.11 |

| **9th bead** | **Oxides:** | **% by weight** |
|---|---|---|
| | Al | 98.58 |
| | V | 0.14 |
| | Fe | 0.41 |
| | Co | 0.16 |
| | Cu | 0.39 |
| | Au | 0.05 |
| | Bi | 0.27 |
| | | |

| **10th bead** | **Oxides:** | **% by weight** |
|---|---|---|
| | Al | 97.71 |
| | V | 0.33 |

| **Final generation: Bi-Cu-Co-Mg-Fe-V-Au** | | |
|---|---|---|
| | Fe | 0.61 |
| | Co | 0.34 |
| | Cu | 0.6 |
| | Au | 0.22 |
| | Bi | 0.19 |

### Example 2

### Example 2:

In the first step, a starting set of 3.5 g of porous γ-aluminum oxide (bead diameter 0.5 mm, obtained from Condea) was divided into 7 equal sets (each of 0.5 g) and distributed among 7 dishes (split). The sets in the dishes were given the designations F', G', H', J', K', L' and M'.

The impregnation solutions used were aqueous solutions of nitrates of the following metals: Zn, Fe, Ni, Cu, Co, Mg and Ca. The concentration of the respective solutions was 2.5 mol/l for all solutions, based on the respective metal. 200 µl of a metal salt solution were pipetted in each case onto the sets F', G', H', J', K', L' and M':

**Table 3:**

| **Set** | F' | G' | H' | J' | K' | L' | M' |
|---|---|---|---|---|---|---|---|
| **Metal salt solution** | Zn | Fe | Ni | Cu | Co | Mg | Ca |

The sets F', G', H', J', K', L' and M' were then dried at 80°C for 2 h and combined to form a set 1 (mix). The set 1 was then divided into 7 equal sets F", G", H", J", K", L" and M" (split).

200 µl of a further metal salt solution were pipetted in each case onto the sets F", G", H", J", K", L" and M":

**Table 4:**

| **Set** | F" | G" | H" | J" | K" | L" | M" |
|---|---|---|---|---|---|---|---|
| **Metal salt solution** | Zn | Fe | Ni | Cu | Co | Mg | Ca |

The sets F" G", H", J", K", L" and M" were then dried at 80°C for 2 h and combined to form a set 2 (mix). The set 2 was then divided into 7 equal sets F, G, H, J, K, L and M (split).
200 µl of a further metal salt solution were pipetted in each case onto the sets F, G, H, J, K, L and M:

**Table 5:**

| **Set** | F | G | H | J | K | L | M |
|---|---|---|---|---|---|---|---|
| **Metal salt solution** | Zn | Fe | Ni | Cu | Co | Mg | Ca |

The sets F, G, H, J, K, L and M were then dried at 80°C for 2 h and then calcined at 1 000°C for 5 h in order to produce compounds of the spinel type on the aluminum oxide beads.

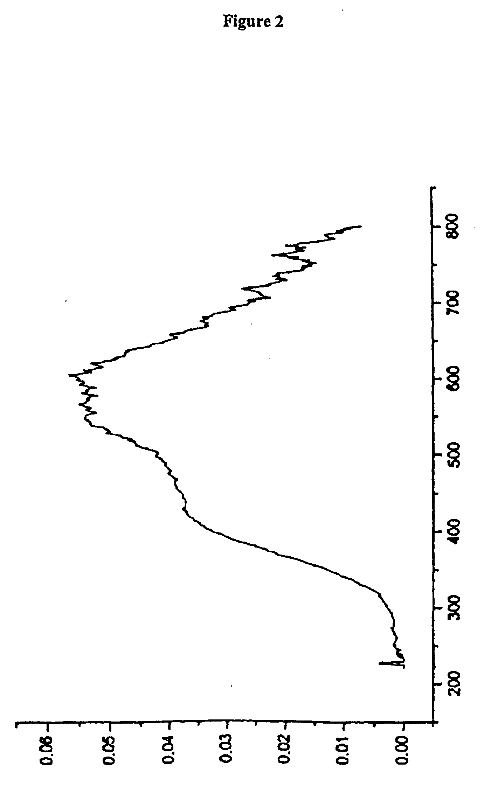

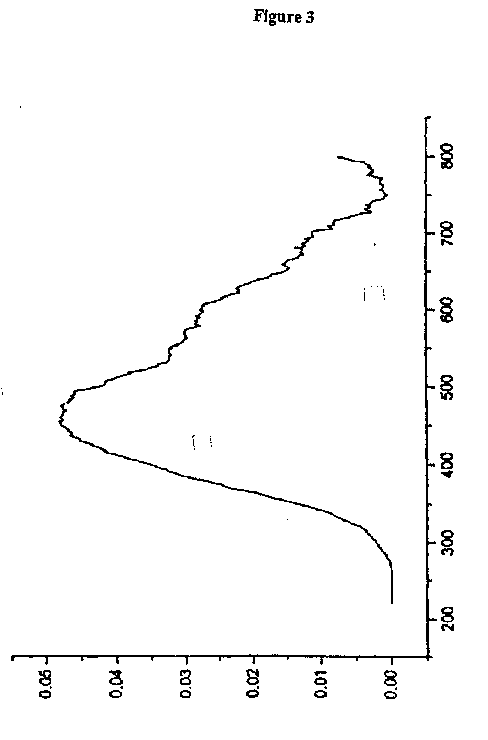

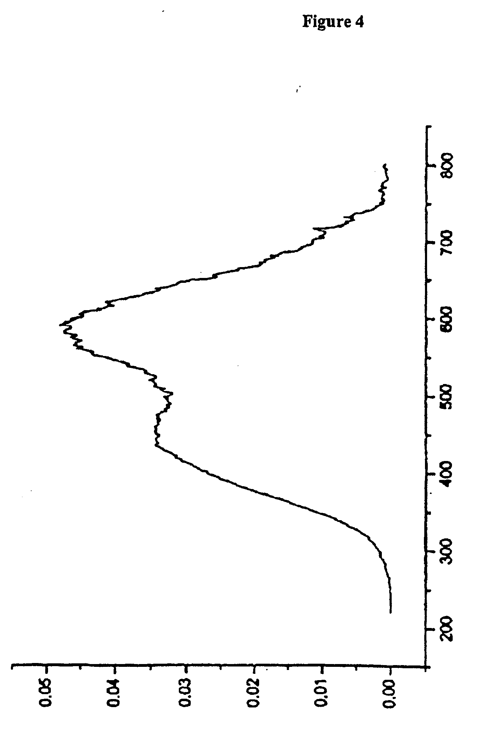

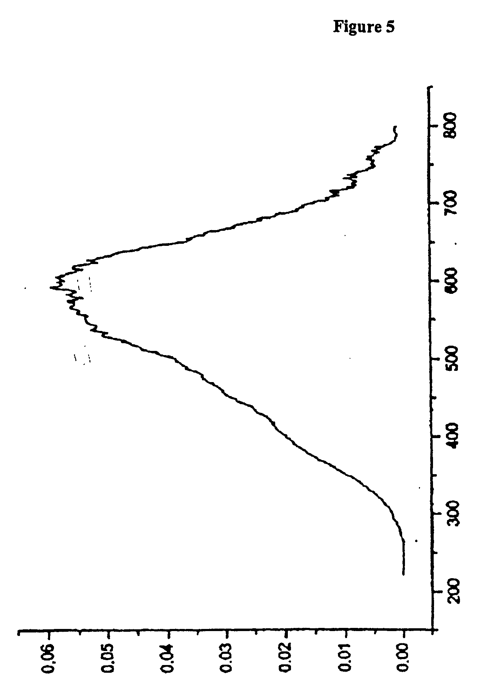

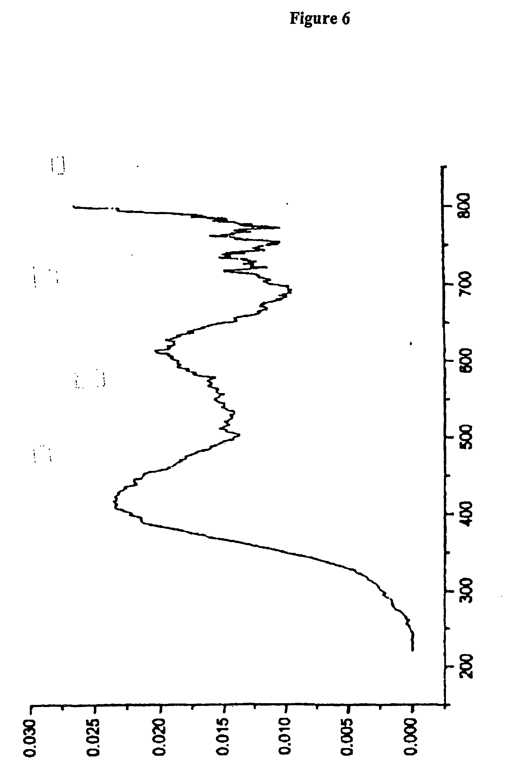

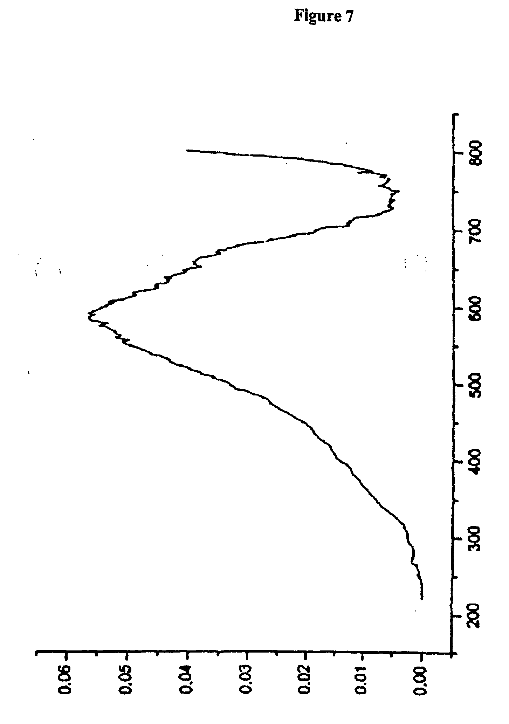

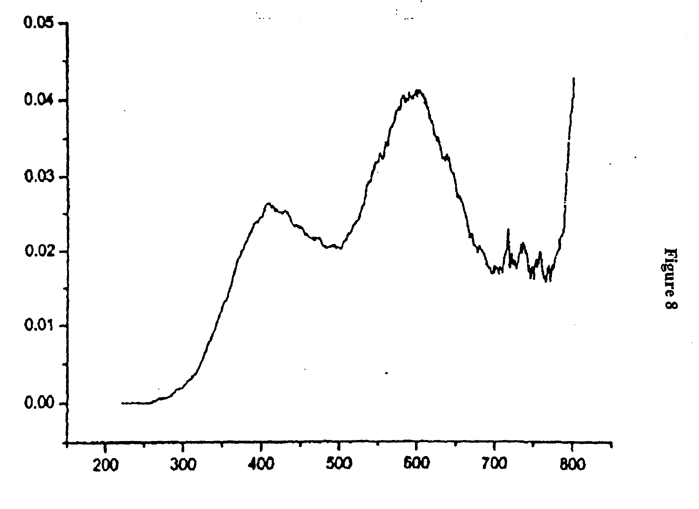

Individual beads were selected from the sets F, G, H, J, K, L and M and subjected to UV-Vis spectroscopic analysis in diffuse reflection. The following figures show the spectra obtained for a number of individual beads from the respective sets. By way of example, spectra form the beads from set F are shown in Figs. 2 to 8. In this case compounds were obtained of the mixed oxide type, for example spinels, perowskites, elpasolites, etc., which can be used as color pigments.

### Example 3

The aqueous impregnation solutions were the same as the ones used in Example 1 (see Tablel).

In a 1st step (1st generation), 500 µl of Bi solution were pipetted to 1 g of γ-aluminum oxide beads (obtained from CONDEA, 0.5 mm in diameter) evenly distributed over the surface in a porcelain dish. After intensive mixing, the set was halved and transferred to two new porcelain dishes; the first half of the beads was contacted with cobalt solution (= 2nd generation Bi-Co), and the second half with copper solution (= 2nd generation Bi-Cu). The two sets of the second generation were not combined as in Example 1 but contacted with the magnesium solution (= 3rd generation Bi-Co-Mg and Bi-Cu-Mg). Since the "pooling" step is omitted, this example is termed the "direct divide" case. The mixed support bead sets were then halved again and divided among two dishes; one half was contacted with a vanadium precursor solution (= 4th generation Bi-Co-Cu-Mg-V), and the second with iron solution (= 4th generation Bi-Co-Cu-Mg-Fe). Both sets were recombined, intensively mixed and in the last step were contacted with the gold solution (= final generation Bi-Co-Cu-Mg-Fe-V-Au).

Finally a drying step was carried out: the final generation was treated for 12 h at 80°C in a drying cabinet. To monitor the result, some beads of each generation were taken off and studied by X-ray fluorescence analysis (µ-EDX). The results were summarized in Table 2. All data in per cent by weight (WT%) are based on the corresponding stable oxides of the metals. The third generation (Bi-Co-Cu-Mg) was not listed, since magnesium is not detectable as a light metal with the X-ray fluorescence analysis used.
A seven-component system ultimately results on aluminum oxide supports. At each synthesis step, as shown in Table 2, a number of beads were taken off and dried for 12 h at 80°C. Table 2 shows that all binary to heptary systems can be obtained in a simple manner. Each bead, considered statistically, has a different composition. Owing to the manner of liquid application, after each synthesis step there also exists a set of non-reacted beads, so that in addition to the desired heptary systems, all binary, ternary etc. component systems are also produced in parallel therewith. These subgroups can be specifically produced by taking out a bead set at a corresponding point in the production sequence.

Fig. 2 through Fig. 8 show representative results of UV-VIS spectroscopic measurements on selected individual beads from set F. As can be seen from the spectra each of the seven studied beads has a different composition of the spinel-type compound present on it. The same results, i.e. different compositions on different beads have been found for individual beads from other sets, such as the sets G, H, J, K, L or M. For all spectra, the x-axis represents the wavelength given in nanometers and the y-axis represents F(R) in Kubelka-Munk units.

## Claims

1. Process for producing a multiplicity of building blocks of a library of materials which are inorganic materials comprising a sequence of the following steps:
(0) contacting a first set M₁ containing a number t₁ of support bodies of the kind T1 with at least one substance zero of the kind S₀ₛ, where s is an integer ≥ 1.
(1) dividing said first set M₁ containing a number t₁ of support bodies of the kind T1 into a number k of first subsets M₁ₘ containing a number t₁ₘ of support bodies that is always less than the number of support bodies in the set, where m and t₁ are mutually independent integers≥ 1, and t₁ ≥ k with k being an integer≥ 2,
(2) contacting all of a number t₁ₘ of support bodies of the kind T1 that are part of at least one subset M₁ₘ with at least one first substance of the kind S₁ₛ and all of a number t₁ₘ of support bodies of the kind T1 that are part of at least one other subset M₁ₘ with at least one other first substance S₁ₛ,
**characterized in that** the support bodies are porous and having a BET surface area of 1 to 1000 m²/g and that at least parts of the substances penetrate into at least parts of the bulk of the support bodies, and wherein s, t₁ and m are mutually independent integers ≥ 1,
(3) combining complete subsets M₁ₘ to result in one or more second sets M₂ₙ containing a number t₂ₙ of support bodies of the kind T1, where n, m and t₂ are integers≥ 1 and n < m, wherein the support bodies are foamed ceramics, metallic foams, metallic or ceramic monoliths, hydrogels, sintered glasses or sintered ceramics
**characterized in that step** (1) is carried out before steps (2) and (3) and step (0) is carried out before step (1), further **characterized in that** the building blocks are inorganic materials and that the support bodies are altered during any of the steps mentioned above or in a working-up procedure occurring after completion of the steps mentioned above, wherein the term "altered" relates to any chemical or physical-chemical change, including the formation of covalent or ionic bonds, or any combination thereof, that the support bodies are subjected to, including but not limited to a complete or partial reaction of the support body material with any or all of the substances that it is brought in contact with during any of the steps mentioned above.

2. Process according to Claim 1, in which before and/or after and/or during at least one of the steps (0) to (3) at least one physical treatment is carried out on at least one of the support bodies, in which case the respective treatment of any of the individual support bodies can be identical or different.

3. Process according to Claim 1 or Claim 2, in which before and/or after and/or during at least one of the steps (0) to (3) at least one chemical treatment is carried out on at least one of the support bodies, in which case the respective treatment of any of the individual support bodies can be identical or different.

4. Process according to any of the Claims 1 to 3, in which before and/or after and/or during at least one of the steps (0) to (3) at least one physicochemical treatment is carried out on at least one of the support bodies, in which case the respective treatment of any of the individual support bodies can be identical or different.

5. Process according to any of the preceding claims, in which the first set M₁ containing a number t₁ of support bodies comprises at least two different support bodies of the kind T1X, where X is an integer ≥1.

6. Process according to any of the preceding claims, in which building blocks and/or identical or different support bodies of the kind T2Y which are identical to or different from the support bodies of the kind T1 or T1X, where Y is an integer ≥ 1, are added to at least one of the subsets M₁ₘ before and/or after and/or during the respective steps (I), (0), (1), (2) or (3) or the totality of the steps or a sequence of the steps defined in Claims 1 to 5.

7. Process according to any of the preceding claims, in which a freely selectable number of building blocks and/or support bodies T1 and/or T1X and/or T2Y can be taken off from and/or added to at least one of the subsets M₁ₘ before and/or after and/or during the steps defined in Claims 1 to 6.

8. Process according to any of the preceding claims, **characterized in that** the substances are contacted in accordance with a procedure which is selected from: addition of solution, suspension, dispersion, emulsion, melt or from powder-coating processes.

9. Process according to any of the preceding claims, **characterized in that** at least two of the substances react in any possible combination with one another or the support body or both after at least one contacting step.

10. Process according to any of the preceding claims, **characterized in that** at least one of the support bodies used in any of the steps or added to and/or withdrawn from any of the (sub)sets can be altered due to at least one physical or chemical or physicochemical treatment or any combination thereof.

11. Process according to any of the preceding claims for identifying different building blocks of a library of materials, **characterized in that** each building block is provided with an individualizable coding.

12. Process according to Claim 11, **characterized in that** the coding is substantially chemically inert.

13. Process according to Claim 12, **characterized in that** the coding is sufficiently inert to remain readable by a designated device even after having been subjected to all steps or treatments as defined by the inventive process.

14. Process according to any of Claims 11 to 13, **characterized in that** the coding can be read by analytical techniques selected from RFA, UV/VIS spectroscopy, detection of high-energy radiation, NMR spectroscopy, ESR spectroscopy, Mössbauer spectroscopy, SIMS, optical methods (fluorescence spectroscopy, phosphorescence spectroscopy).

15. Process according to any of the preceding claims for determining at least one performance characteristic and/or property of building blocks in a library of materials, **characterized in that** the process comprises the following step:
(a) determination of at least one first performance characteristic and/or property of at least one building block using at least one sensor.

16. Process according to Claim 15 which additionally comprises the following step:
(b) determination of at least one further performance characteristic and/or property of the at least one building block using at least one further sensor.

17. Process according to Claim 15 or 16, **characterized in that** the further performance characteristic and/or property is only determined for a selected group of building blocks.

18. Process according to Claim 17, **characterized in that** the selection of the building blocks that lead to determining the further performance characteristic and/or property depends on the result of the determination of the first performance characteristic and/or property.

19. Process according to any of Claims 15 to 18, **characterized in that** the building blocks are selected for the further steps according to the invention automatically by a data processing system.

20. Process according to any of Claims 15 to 19, **characterized in that**, before step (b), at least one starting material is introduced at at least two building blocks of the library of materials, which are separated from one another, to carry out a chemical and/or physical and/or physicochemical step in the presence of at least one building block and, after it flows through or around the building block, an effluent stream is obtained.

21. Process according to any of Claims 15 to 20, **characterized in that** the sensor is based on a method for determination which is selected from the group consisting of infrared thermography, infrared thermography in combination with mass spectrometry, mass spectrometery, GC, LC, HPLC, micro-GC, dispersive FTIR spectroscopy, Raman spectroscopy, NIR spectroscopy, UV spectroscopy, UV/VIS spectroscopy, NMR spectroscopy, ESR spectroscopy, microwave spectroscopy, GC-MS spectrometry, infrared thermography/Raman spectroscopy, infrared thermography/dispersive FTIR spectroscopy, color detection with a chemical indicator/MS, color detection with a chemical indicator/GCMS, color detection with a chemical indicator/dispersive FTIR spectroscopy, photoacoustic analysis and tomographic NMR and ESR methods, electrochemical or chemical sensors.

## Patentansprüche

1. Verfahren zur Herstellung einer Vielzahl von Bausteinen einer Bibliothek von Materialien, welche anorganische Materialien sind, umfassend eine Sequenz der folgenden Schritte:
(0) Kontaktieren einer ersten Menge M₁, welche eine Anzahl t₁ von Trägerkörpern der Art T1 enthält mit mindestens einer Substanz Null der Art S₀ₛ, wobei s eine ganze Zahl ≥ 1 ist,
(1) Teilen der besagten ersten Menge M₁, welche eine Anzahl t₁ der Trägerkörper der Art T1 enthält, in eine Anzahl k erster Teilmengen M₁ₘ, welche eine Anzahl t₁ₘ von Trägerkörpern enthält, die immer niedriger als die Anzahl der Trägerkörper in der Menge ist, wobei m und t₁ unabhängig voneinander ganze Zahlen ≥ 1 sind, und t_{1≥} k ist, wobei k eine ganze Zahl ≥ 2 ist,
(2) Kontaktieren aller Trägerkörper einer Anzahl t₁ₘ von Trägerkörpern der Art T1, die Teil mindestens einer Teilmenge M₁ₘ sind mit mindestens einer ersten Substanz der Art S_{1S} und aller Trägerkörper einer Anzahl t₁ₘ von Trägerkörpern der Art T1, welche Teil mindestens einer anderen Teilmenge M₁ₘ mit mindestens einer anderen ersten Substanz S₁ₛ sind,
**dadurch gekennzeichnet, dass** die Trägerkörper porös sind und eine BET-Oberfläche von 1 bis 1000 m²/g aufweisen, und dass mindestens Teile der Substanzen in mindestens Teile der Masse der Trägerkörper eindringen, und wobei s, t₁ und m unabhängig voneinander ganze Zahlen≥ 1 sind,
(3) Kombinieren vollständiger Teilmengen M₁ₘ, woraus ein oder mehrere zweite Mengen M₂ₙ resultieren, welche eine Anzahl t₂ₙ von Trägerkörpern der Art T1 enthalten, wobei n, m und t₂ ganze Zahlen ≥ 1 und n < m sind, wobei die Trägerkörper geschäumte Keramiken, metallische Schäume, metallische oder keramische Monolithe, Hydrogele, gesintertes Glas oder gesinterte Keramiken sind,
**dadurch gekennzeichnet, dass** Schritt (1) vor den Schritten (2) und (3) und Schritt (0) vor Schritt (1) ausgeführt wird, weiter **dadurch gekennzeichnet, dass** die Bausteine anorganische Materialien sind, und dass die Trägerkörper während einem der vorstehend erwähnten Schritte verändert oder in einem Aufarbeitungsverfahren verändert werden, welches nach Vervollständigung der vorstehend erwähnten Schritte durchgeführt wird, wobei der Begriff "verändert" sich auf einen beliebigen chemischen oder physikalischchemischen Wechsel bezieht, einschließlich der Bildung kovalenter oder ionischer Bindungen oder irgendeiner Kombination davon, dass die Trägerkörper, einschließlich, aber nicht begrenzt auf, einer vollständigen oder teilweisen Reaktion des Trägerkörpermaterials mit einer oder aller der Substanzen unterworfen werden, welche damit während einem der vorstehend erwähnten Schritte in Kontakt gebracht wird oder in Kontakt gebracht werden.

2. Verfahren nach Anspruch 1, in welchem vor und/oder nach und/oder während mindestens einem der Schritte (0) bis (3) mindestens eine physikalische Behandlung auf mindestens einem der Trägerkörper durchgeführt wird, in welchem Fall die jeweilige Behandlung eines der individuellen Trägerkörper identisch oder verschieden sein kann.

3. Verfahren nach Anspruch 1 oder Anspruch 2, in welchem vor und/oder nach und/oder während mindestens einem der Schritte (0) bis (3) mindestens eine chemische Behandlung auf mindestens einem der Trägerkörper durchgeführt wird, in welchem Fall die jeweilige Behandlung eines der individuellen Trägerkörper identisch oder verschieden sein kann.

4. Verfahren nach einem der Ansprüche 1 bis 3, in welchem vor und/oder nach und/oder während mindestens einem der Schritte (0) bis (3) mindestens eine physikalisch-chemische Behandlung auf mindestens einem der Trägerkörper durchgeführt wird, in welchem Fall die jeweilige Behandlung eines der individuellen Trägerkörper identisch oder verschieden sein kann.

5. Verfahren nach einem der vorstehenden Ansprüche, in welchem die erste Menge M₁, welche eine Anzahl t₁ von Trägerkörpern enthält, mindestens zwei verschiedene Trägerkörper der Art T1 X enthält, wobei X eine ganze Zahl ≥ 1 ist.

6. Verfahren nach einem der vorstehenden Ansprüche, in welchem Bausteine und/oder identische oder verschiedene Trägerkörper der Art T2Y, welche identisch oder unterschiedlich zu den Trägerkörpern der Art T1 oder T1X sind, wobei Y eine ganze Zahl ≥ 1 ist, zu mindestens einer der Teilmengen M₁ₘ vor und/oder nach und/oder während der jeweiligen Schritte (I), (0), (1), (2) oder (3) oder der Gesamtheit der Schritte oder einer Sequenz der in den Ansprüchen 1 bis 5 definierten Schritte hinzugefügt werden.

7. Verfahren nach einem der vorstehenden Ansprüche, in welchem eine frei wählbare Anzahl von Bausteinen und/oder Trägerkörpern T1 und/oder T1X und/oder T2Y vor und/oder nach und/oder während der in den Ansprüchen 1 bis 6 definierten Schritte aus mindestens einer der Teilmengen M₁ₘ entnommen und/oder mindestens einer der Teilmengen M₁ₘ hinzugefügt werden kann.

8. Verfahren nach einem der vorstehenden Ansprüche, **dadurch gekennzeichnet, dass** die Substanzen gemäß einem Verfahren kontaktiert werden, welches ausgewählt ist aus: Hinzufügen eines Lösungs-, Suspensions-, Dispersions-, Emulsions-, Schmelz- oder Pulverbeschichtungsverfahrens.

9. Verfahren nach einem der vorstehenden Ansprüche, **dadurch gekennzeichnet, dass** mindestens zwei der Substanzen in irgendeiner möglichen Kombination miteinander oder mit dem Trägerkörper oder mit beiden nach mindestens einem Kontaktierungsschritt reagieren.

10. Verfahren nach einem der vorstehenden Ansprüche, **dadurch gekennzeichnet, dass** mindestens einer der Trägerkörper, der in einem der Schritte verwendet oder hinzugefügt und/oder einer der (Teil-)Mengen entnommen wird, aufgrund mindestens einer physikalischen oder chemischen oder physikalisch-chemischen Behandlung oder einer Kombination davon verändert werden kann.

11. Verfahren nach einem der vorstehenden Ansprüche zum Identifizieren verschiedener Bausteine einer Bibliothek von Materialien, **dadurch gekennzeichnet, dass** jeder Baustein mit einer individualisierbaren Kodierung versehen wird.

12. Verfahren nach Anspruch 11, **dadurch gekennzeichnet, dass** die Kodierung im Wesentlichen chemisch inert ist.

13. Verfahren nach Anspruch 12, **dadurch gekennzeichnet, dass** die Kodierung ausreichend inert ist, so dass sie durch eine bestimmte Vorrichtung lesbar bleibt sogar nachdem sie allen Behandlungsschritten, die durch das erfinderische Verfahren definiert sind, ausgesetzt worden ist.

14. Verfahren nach einem der Ansprüche 11 bis 13, **dadurch gekennzeichnet, dass** die Kodierung durch analytische Techniken ausgewählt aus RFA, UV/VIS-Spektroskopie, Detektion hochenergetischer Strahlung, NMR-Spektroskopie, ESR-Spektroskopie, Mössbauer-Spektroskopie, SIMS, optische Methoden (Fluoreszenzspektroskopie, Phosphoresenzspektroskopie) gelesen werden kann.

15. Verfahren nach einem der vorstehenden Ansprüche zur Bestimmung mindestens eines Leistungsmerkmals und/oder Eigenschaft von Bausteinen in einer Bibliothek von Materialien, **dadurch gekennzeichnet, dass** das Verfahren den folgenden Schritt umfasst:
(a) Bestimmung mindestens eines ersten Leistungsmerkmals und/oder Eigenschaft mindestens eines Bausteins unter Verwendung mindestens eines Sensors.

16. Verfahren nach Anspruch 15, welches zusätzlich den folgenden Schritt umfasst:
(b) Bestimmung mindestens eines weiteren Leistungsmerkmals und/oder Eigenschaft des mindestens einen Bausteins unter Verwendung mindestens eines weiteren Sensors.

17. Verfahren nach Anspruch 15 oder 16, **dadurch gekennzeichnet, dass** das weitere Leistungsmerkmal und/oder die Eigenschaft nur für eine ausgewählte Gruppe von Bausteinen bestimmt wird.

18. Verfahren nach Anspruch 17, **dadurch gekennzeichnet, dass** die Auswahl der Bausteine, welche zur Bestimmung des weiteren Leistungsmerkmals und/oder der Eigenschaft führt, vom Ergebnis der Bestimmung des ersten Leistungsmerkmals und/oder der Eigenschaft abhängt.

19. Verfahren nach einem der Ansprüche 15 bis 18, **dadurch gekennzeichnet, dass** die Bausteine für die weiteren erfindungsgemäßen Schritte automatisch durch ein Datenverarbeitungssystem ausgewählt werden.

20. Verfahren nach einem der Ansprüche 15 bis 19, **dadurch gekennzeichnet, dass**, vor Schritt (b), mindestens ein Ausgangsmaterial in mindestens zwei Bausteine der Bibliothek von Materialien eingeführt wird, welche voneinander getrennt sind, um einen chemischen und/oder physikalischen und/oder physikalischchemischen Schritt in Anwesenheit mindestens eines Bausteins durchzuführen, und, nachdem es durch oder um den Baustein herum fließt, ein Ablaufstrom erhalten wird.

21. Verfahren nach einem der Ansprüche 15 bis 20, **dadurch gekennzeichnet, dass** der Sensor auf einem Bestimmungsverfahren basiert, das ausgewählt ist aus der Gruppe bestehend aus Infrarotthermografie, Infrarotthermografie in Kombination mit Massenspektrometrie, Massenspektrometrie, GC, LC, HPLC, Micro-GC, dispersive FTIR-Spektroskopie, Raman-Spektroskopie, NIR-Spektroskopie, UV-Spektroskopie, UV/VIS-Spektroskopie, NMR-Spektroskopie, ESR-Spektroskopie, Mikrowellen-Spektroskopie, GC-MS-Spektrometrie, Infrarotthermografie/Raman-Spektroskopie, Infrarotthermografie/dispersive FTIR-Spektroskopie, Farbdetektion mit einem chemischen Indikator/MS, Farbdetektion mit einem chemischen lndikator/GCMS, Farbdetektion mit einem chemischen Indikator/dispersive FTIR-Spektroskopie, photoakustische Analyse und tomographische NMR- und ESR-Verfahren, electrochemische oder chemische Sensoren.

## Revendications

1. Procédé de production d'une multiplicité de blocs de construction d'une bibliothèque de matériaux qui sont des matériaux inorganiques comprenant une séquence des étapes suivantes :
(0) la mise en contact d'un premier jeu M₁ contenant un nombre t₁ de corps de support du type T1 avec au moins une substance zéro du type S₀ₛ, où s est un nombre entier ≥ 1,
(1) la division dudit premier jeu M₁ contenant un nombre t₁ de corps de support du type T1 en un nombre k de premiers sous-jeux M₁ₘ contenant un nombre t₁ₘ de corps de support qui est toujours inférieur au nombre de corps de support dans le jeu, où m et t₁ sont des nombres entiers mutuellement indépendants ≥ 1, et t₁ ≥ k, k étant un nombre entier ≥ 2,
(2) la mise en contact de tous les corps de support de type T1 parmi un nombre t₁ₘ qui font partie d'au moins un sous-jeu M₁ₘ avec au moins une première substance du type S₁ₛ et de tous les corps de support de type T1 parmi un nombre t₁ₘ qui font partie d'au moins un autre sous-jeu M₁ₘ avec au moins une autre première substance du type S₁ₛ,
**caractérisé en ce que** les corps de support sont poreux et ont une surface spécifique BET de 1 à 1 000 m²/g et **en ce qu'**au moins des parties des substances pénètrent au moins dans des parties du volume des corps de support, et où s, t₁ et m sont des nombres entiers mutuellement indépendants ≥ 1,
(3) la combinaison des sous-jeux complets M₁ₘ pour conduire à un ou plusieurs seconds jeux M₂ₙ contenant un nombre t₂ₙ de corps de support du type T1, où n, m et t₂ sont des nombres entiers ≥ 1 et n < m, où les corps de support sont constitués de matériaux céramiques expansés, de mousses métalliques, de monolithes métalliques ou céramiques, d'hydrogels, de verres frittés ou de matériaux céramiques frittés,
**caractérisé en ce que** l'étape (1) est réalisée avant les étapes (2) et (3) et que l'étape (0) est réalisée avant l'étape (1), **caractérisé en outre en ce que** les blocs de construction sont des matériaux inorganiques et **en ce que** les corps de support sont modifiés pendant l'une quelconque des étapes mentionnées ci-dessus ou pendant l'opération de travail ayant lieu après les étapes mentionnées ci-dessus, où le terme « modifié » désigne un quelconque changement chimique ou physico-chimique, y compris la formation de liaisons covalentes ou ioniques, ou une quelconque combinaison de ceux-ci, **en ce que** les corps de support sont soumis, notamment mais sans y être limités, à une réaction totale ou partielle du matériau de corps de support avec l'une quelconque ou avec toutes les substances avec lesquelles il est mis en contact pendant l'une quelconque des étapes mentionnées ci-dessus.

2. Procédé selon la revendication 1, dans lequel avant et/ou après et/ou pendant l'une au moins des étapes (0) à (3), au moins un traitement physique est réalisé sur l'un au moins des corps de support, auquel cas le traitement respectif de l'un quelconque des corps de support individuels peut être identique ou différent.

3. Procédé selon la revendication 1 ou la revendication 2, dans lequel avant et/ou après et/ou pendant l'une au moins des étapes (0) à (3), au moins un traitement chimique est réalisé sur l'un au moins des corps de support, auquel cas le traitement respectif de l'un quelconque des corps de support individuels peut être identique ou différent.

4. Procédé selon l'une quelconque des revendications 1 à 3, dans lequel avant et/ou après et/ou pendant l'une au moins des étapes (0) à (3), au moins un traitement physico-chimique est réalisé sur l'un au moins des corps de support, auquel cas le traitement respectif de l'un quelconque des corps de support individuels peut être identique ou différent.

5. Procédé selon l'une quelconque des revendications précédentes, dans lequel le premier jeu M₁ contenant un nombre t₁ de corps de support comprend au moins deux corps de support différents du type T1X, où X est un nombre entier ≥ 1.

6. Procédé selon l'une quelconque des revendications précédentes, dans lequel les blocs de construction et/ou les corps de support identiques ou différents du type T2Y qui sont identiques ou différents des corps de support du type T1 ou T1X, où Y est un nombre entier ≥ 1, sont ajoutés à l'un au moins des sous-jeux M₁ₘ avant et/ou après et/ou pendant les étapes respectives (I), (0), (1), (2) ou (3) ou la totalité des étapes ou d'une séquence des étapes définies dans les revendications 1 à 5.

7. Procédé selon l'une quelconque des revendications précédentes, dans lequel un nombre susceptible d'être choisi librement de blocs de construction et/ou de corps de support T1 et/ou T1X et/ou T2Y peut être retiré de, et/ou ajouté à, l'un au moins des sous-jeux M₁ₘ avant et/ou après et/ou pendant les étapes définies dans les revendications 1 à 6.

8. Procédé selon l'une quelconque des revendications précédentes, **caractérisé en ce que** les substances sont mises en contact selon un mode opératoire qui est choisi parmi : l'addition d'une solution, d'une suspension, d'une dispersion, d'une émulsion, d'une masse en fusion ou les procédés de revêtement de poudre.

9. Procédé selon l'une quelconque des revendications précédentes, **caractérisé en ce qu'**au moins deux des substances réagissent dans une quelconque combinaison possible les unes avec les autres ou avec le corps de support ou avec les deux après au moins une étape de mise en contact.

10. Procédé selon l'une quelconque des revendications précédentes, **caractérisé en ce que** l'un au moins des corps de support utilisés dans l'une quelconque des étapes ou ajoutés à, et/ou soutirés de, l'un quelconque des (sous-)jeux peut être modifié en raison d'au moins un traitement physique ou chimique ou physico-chimique ou d'une quelconque combinaison de ceux-ci.

11. Procédé selon l'une quelconque des revendications précédentes, pour identifier différents blocs de construction d'une bibliothèque de matériaux, **caractérisé en ce que** chaque bloc de construction porte un code susceptible d'être individualisé.

12. Procédé selon la revendication 11, **caractérisé en ce que** le code est essentiellement inerte au plan chimique.

13. Procédé selon la revendication 12, **caractérisé en ce que** le code est suffisamment inerte pour rester lisible par un dispositif désigné même après avoir été soumis à toutes les étapes ou tous les traitements définis dans le procédé de l'invention.

14. Procédé selon l'une quelconque des revendications 11 à 13, **caractérisé en ce que** le code peut être lu par des techniques analytiques choisies parmi la RFA, la spectroscopie UV/VIS, la détection d'un rayonnement de forte énergie, la spectroscopie RMN, la spectroscopie ESR, spectroscopie de Mössbauer, la SIMS, les procédés optiques (spectroscopie par fluorescence, spectroscopie par phosphorescence).

15. Procédé selon l'une quelconque des revendications précédentes, pour déterminer au moins une caractéristique de performance et/ou une propriété des blocs de construction dans une bibliothèque de matériaux, **caractérisé en ce que** le procédé comprend l'étape suivante :
(a) la détermination d'au moins une première caractéristique de performance et/ou une propriété d'au moins un bloc de construction à l'aide d'au moins un capteur.

16. Procédé selon la revendication 15, qui comprend de plus l'étape suivante :
(b) la détermination d'au moins une autre caractéristique de performance et/ou une autre propriété du au moins un bloc de construction à l'aide d'au moins un autre capteur.

17. Procédé selon la revendication 15 ou 16, **caractérisé en ce que** l'autre caractéristique de performance et/ou l'autre propriété est uniquement déterminée pour un groupe choisi de blocs de construction.

18. Procédé selon la revendication 17, **caractérisé en ce que** le choix des blocs de construction qui conduisent à la détermination de l'autre caractéristique de performance et/ou de l'autre propriété dépend du résultat de la détermination de la première caractéristique de performance et/ou de la première propriété.

19. Procédé selon l'une quelconque des revendications 15 à 18, **caractérisé en ce que** les blocs de construction sont choisis pour les autres étapes selon l'invention automatiquement par un système de traitement de données.

20. Procédé selon l'une quelconque des revendications 15 à 19, **caractérisé en ce que**, avant l'étape (b), au moins une matière de départ est introduite dans au moins deux blocs de construction de la bibliothèque de matériaux, qui sont séparés l'un de l'autre, pour réaliser une étape chimique et/ou physique et/ou physico-chimique en présence d'au moins un bloc de construction et, après qu'elle s'écoule à travers ou autour du bloc de construction, un courant d'effluent est obtenu.

21. Procédé selon l'une quelconque des revendications 15 à 20, **caractérisé en ce que** le capteur est basé sur un procédé de détermination qui est choisi dans le groupe constitué par la thermographie infrarouge, la thermographie infrarouge en combinaison avec une spectrométrie de masse, la spectrométrie de masse, la CG, la CL, la HPLC, la micro-CG, la spectroscopie FTIR dispersive, la spectroscopie de Raman, la spectroscopie NIR, la spectroscopie UV, la spectroscopie UV/VIS, la spectroscopie RMN, la spectroscopie ESR, la spectroscopie à micro-ondes, la spectroscopie GC-MS, la thermographie infrarouge/spectroscopie de Raman, la thermographie infrarouge/spectroscopie FTIR dispersive, la détection de couleur avec un indicateur chimique/MS, la détection de couleur avec un indicateur chimique/CGMS, la détection de couleur avec un indicateur chimique/spectroscopie FTIR dispersive, l'analyse photo-acoustique et la RMN tomographique et les procédés de ESR, les capteurs électrochimiques ou chimiques.
